# EUROPÄISCHE PATENTSCHRIFT

(11) **EP 3 752 007 B1**
(45) Veröffentlichungstag und Bekanntmachung des Hinweises auf die Patenterteilung: **20.12.2023**
(21) Anmeldenummer: 19704801.0
(22) Anmeldetag: 11.02.2019
(51) Int. Cl.: A23L 3/26, A23L 3/32

(54) **DURCHFLUSSZELLE ZUR BEHANDLUNG VON FLÜSSIGKEITEN**
FLOW CELL FOR TREATING LIQUIDS
CUVE À CIRCULATION POUR LE TRAITEMENT DE LIQUIDES

(30) Priorität: 15.02.2018 DE 102018202369
(43) Veröffentlichungstag der Anmeldung: 23.12.2020
(73) Patentinhaber: Deutsches Institut für Lebensmitteltechnik e.V., 49610 Quakenbrück (DE)
(72) Erfinder: STUTE, Martin, 49610 Quakenbrück (DE); ISAAK, Johann, 49610 Quakenbrück (DE)
(74) Vertreter: Taruttis, Stefan Georg
(86) Internationale Anmeldenummer: PCT/EP2019/053348
(87) Internationale Veröffentlichungsnummer: WO 2019/158491

(56) Entgegenhaltungen:
- EP-A1- 0 553 377
- CA-A- 882 293
- US-A- 6 093 432

## Beschreibung

Die vorliegende Erfindung betrifft eine Durchflusszelle, mit der Flüssigkeiten mit einem elektrischen Feld behandelt werden können, das zwischen zwei Elektroden aufgebaut wird. Die Durchflusszelle ist insbesondere zur Verwendung als Behandlungsvorrichtung von Flüssigkeiten geeignet, die pumpfähige Lebensmittel sind, und für ein Verfahren zur Behandlung von Flüssigkeiten mit elektrischen Feldern. Die Elektroden sind so angeordnet, dass sich dazwischen ein elektrisches Feld radial in der Durchflusszelle ausbildet.

Die Durchflusszelle zeichnet sich durch eine Struktur aus, die eine einfache Montage und Demontage erlaubt, z.B. zur Reinigung ihrer Innenflächen.

In einer Ausführungsform liegt die Durchflusszelle in Kombination mit zumindest einer weiteren Elektrode vor, die einen gegenüber einer in der Durchflusszelle enthaltenen Elektrode unterschiedlichen Durchmesser aufweist, bzw. als Kombination einer Durchflusszelle mit zumindest 2 Elektroden, von denen nur eine in dem Rohrstück eingebaut ist. In der Kombination kann zumindest eine Elektrode gegen eine weitere Elektrode mit unterschiedlichem Durchmesser ausgetauscht werden, z.B. um den Abstand zwischen den Elektroden z.B. bei einem Wechsel der Flüssigkeit zu verändern und bzw. anzupassen.

### Stand der Technik

Die DE 690 33 273 T2 beschreibt eine Durchflusszelle, bei der das elektrische Feld radial innerhalb eines Rohrs gebildet wird, wobei das Rohr die Durchflusszelle bildet, in der koaxial eine zweite Elektrode angeordnet und axial verschieblich ist, indem sie an einem Ende des Rohrs verschieblich geführt ist.

Die US 2004 / 0 238 348 A1 beschreibt eine Durchflusszelle, in der ein radial gerichtetes elektrisches Feld zwischen einer rohrförmigen äußeren Elektrode und einer koaxial darin angeordneten Innenelektrode erzeugt werden kann. Die Innenelektrode ist mit einem Träger an der Innenwandung des Rohrs befestigt, das die Durchflusszelle bildet.

Die EP 1 198 997 A2 zeigt eine Durchflusszelle, in der in einem kegelförmigen Abschnitt einer Leitung koaxial eine axial verschiebliche Innenelektrode angeordnet ist und die Gegenelektrode von drei durch Isolatoren beabstandete ringförmige Teilelektroden gebildet wird, die einen Wandabschnitt der Leitung bilden. Die Innenelektrode ist kegelförmig und an einem Ende der Durchflusszelle verschieblich gelagert, an dem ein seitlicher Anschluß eine Einlass- oder Auslassöffnung bildet.

Die US 6,093,432 A zeigt eine Durchflusszelle, die innerhalb eines blockförmigen, einstückigen Gehäuses eine ringscheibenförmige Außenelektrode und darin koaxial mit Abstand eine Innenelektrode, die von Trägern gehalten ist.

Die EP 0 553 377 A1 zeigt eine Durchflusszelle, bei der ein dünner Abschnitt 61 eines Innenleiters koaxial in einem beschichteten Außenzylinder angeordnet ist. Der Innenleiter wird an gegenüberliegenden Enden durch Isolierscheiben gehalten.

Die CA 882293 A zeigt eine Entladungsröhre zur Herstellung von Ozon, wobei zwischen zwei rohrförmigen konzentrischen Elektroden konzentrisch ein Dielektrikum angeordnet ist. Die zylindrische Innenelektrode, das isolierende Rohr und die Außenelektrode liegen in den beidseitigen Endkappen und werden konzentrisch auf Abstand gehalten. Eine zwischen zwei Scheiben eingeklemmte Dichtung dichtet den Innenraum der inneren rohrförmigen Elektrode ab, der als Kühlkammer dienen soll.

### Aufgabe der Erfindung

Der Erfindung stellt sich die Aufgabe, eine alternative Durchflusszelle bereitzustellen, insbesondere eine, die einfach zu montieren und einfach zu zerlegen ist. Eine weitere Aufgabe liegt in der Bereitstellung einer alternativen Durchflusszelle und eines damit durchführbaren Verfahrens zur Behandlung von Flüssigkeiten mit elektrischen Feldern, die bevorzugt gepulst sind.

### Beschreibung der Erfindung

Die Erfindung löst die Aufgabe mit den Merkmalen des Anspruchs 1.

In dem Rohrstück ist eine erste Elektrode koaxial angeordnet. Das Rohrstück wird von einem ersten Rohrabschnitt und einem zweiten Rohrabschnitt und einer zwischen dem ersten und dem zweiten Rohrabschnitt angeordneten zweiten Elektrode gebildet, die umfänglich geschlossen ist, sodass ihre innere Oberfläche einen Teil des Rohrstücks bildet. Die Anordnung aus erstem und zweitem Rohrabschnitt und der zwischen diesen angeordneten, umfänglich geschlossenen zweiten Elektrode wird von einem ersten und einem zweiten Radialträger umfasst, die angrenzend an die Enden des ersten Rohrabschnitts und des zweiten Rohrabschnitts angeordnet sind, die der zweiten Elektrode jeweils gegenüberliegen. Der erste und der zweite Radialträger liegen gegen die gegenüberliegenden Enden des ersten bzw. zweiten Rohrabschnitts jeweils entlang deren Querschnittsfläche bzw. entlang deren Stirnfläche an und sind jeweils umfänglich geschlossen. Bevorzugt bilden der erste und zweite Radialträger jeweils einen Abschnitt der Durchflusszelle bzw. des Rohrstücks. Der erste und der zweite Radialträger sind koaxial zur Längsachse des Rohrstücks angeordnet. Die erste Elektrode ist an dem ersten Radialträger und an dem zweiten Radialträger festgelegt, beispielsweise jeweils mit einem gegenüberliegenden Ende der ersten Elektrode. Einer von erstem und zweitem Radialträger, vorzugsweise beide Radialträger, sind elektrisch leitend mit der ersten Elektrode verbunden. Optional kann die erste Elektrode nur mit dem ersten und zweiten Radialträger verbunden sein. Der erste und der zweite Radialträger sind mit der ersten Elektrode verbunden, wobei zwischen dem ersten und zweiten Radialträger der erste und der zweite Rohrabschnitt und dazwischen die zweite Elektrode angeordnet sind. Die erste Elektrode spannt den ersten Radialträger und den zweiten Radialträger aufeinander zu, sodass der erste und zweite Radialträger zwischen sich den ersten und zweiten Rohrabschnitt und dazwischen die zweite Elektrode aneinanderpressen. Weiter bevorzugt sind der erste und der zweite Radialträger und der zwischen diesen liegende erste Rohrabschnitt und zweite Rohrabschnitt und die zwischen diesen beiden Rohrabschnitten angeordnete zweite Elektrode nur dadurch miteinander verbunden, dass der erste Radialträger mit dem zweiten Radialträger mittels der ersten Elektrode aufeinander zu verspannt sind, sodass z.B. keine zusätzliche Schraubverbindung oder Klemmverbindung den ersten und zweiten Rohrabschnitt, die zweite Elektrode und die Radialträger miteinander verbindet.

Die Erfindung betrifft eine Durchflusszelle mit einem Rohrstück, das sich entlang einer Längsachse erstreckt und an dessen Enden eine Einlassöffnung und eine gegenüberliegende Auslassöffnung angeordnet sind, mit einer zumindest abschnittsweise in dem Rohrstück koaxial angeordneten ersten Elektrode, die koaxial von einer beabstandeten zweiten Elektrode umfasst wird, wobei das Rohrstück von einem ersten Rohrabschnitt und einem zweiten Rohrabschnitt und einer zwischen dem ersten und zweiten Rohrabschnitt angeordneten umfänglich geschlossenen zweiten Elektrode gebildet wird, wobei angrenzend an die der zweiten Elektrode gegenüberliegenden Enden des ersten Rohrabschnitts und des zweiten Rohrabschnitts ein erster und ein zweiter Radialträger angeordnet sind und die erste Elektrode an dem ersten und zweiten Radialträger festgelegt ist, von denen zumindest einer elektrisch leitend mit der ersten Elektrode verbunden ist, und der erste und zweite Radialträger mittels der ersten Elektrode aufeinander zu verspannt sind. Bevorzugt ist der erste Rohrabschnitt nur dadurch flüssigkeitsdicht mit dem ersten Radialträger und der zweiten Elektrode verbunden und der zweite Rohrabschnitt nur dadurch flüssigkeitsdicht mit der zweiten Elektrode und dem zweiten Radialträger verbunden, dass diese durch die mittels der ersten Elektrode gegeneinander gespannten ersten und zweiten Radialträger gegeneinander gepresst sind, bevorzugt mit jeweils dazwischen angeordneten Dichtungen.

Dieses Verspannen vom ersten und zweiten Radialträger gegeneinander mit den zwischen diesen angeordneten ersten und zweiten Rohrabschnitten, zwischen denen die zweite Elektrode angeordnet ist, erlaubt eine einfache Struktur und eine einfache Demontage und Montage der Durchflusszelle, da z.B. nur eine oder beide der Befestigungen, mit denen die erste Elektrode einmal am ersten Radialträger und einmal am zweiten Radialträger festgelegt ist, zur Demontage zu lösen bzw. zur Montage zu fixieren ist. Da die Einlassöffnung und Auslassöffnung entlang der gemeinsamen Längsachse vom ersten und zweiten Rohrabschnitt und der zweiten Elektrode angeordnet ist, wobei auch die erste Elektrode koaxial entlang derselben Längsachse angeordnet ist, ist bevorzugt zumindest eine Befestigung der ersten Elektrode mit einem der Radialträger durch die Einlassöffnung oder die Auslassöffnung zugänglich.

Die Einlassöffnung bzw. die Auslassöffnung wird jeweils von einem der Radialträger gegenüber dem angrenzenden Rohrabschnitt aufgespannt. Bevorzugt wird die Einlassöffnung durch ein erstes Anschlussstück gebildet, das gegenüber dem ersten Rohrabschnitt am ersten Radialträger angeschlossen ist, beispielsweise mittels einer Schraub- oder Klemmverbindung. Die Auslassöffnung wird bevorzugt durch ein zweites Anschlussstück aufgespannt, das gegenüber dem zweiten Rohrabschnitt am zweiten Radialträger angeordnet ist, beispielsweise mittels einer Klemmverbindung oder Schraubverbindung. Das erste Anschlussstück und das zweite Anschlussstück sind bevorzugt aus elektrisch nicht leitendem Material. Weiter bevorzugt weist das erste Anschlussstück gegenüber dem ersten Radialträger einen Anschlussstutzen auf, der die Einlassöffnung aufspannt, und das zweite Anschlussstück weist gegenüber dem zweiten Radialträger einen Anschlussstutzen auf, der die Auslassöffnung aufspannt.

Bevorzugt ist die erste Elektrode mit einem ihrer Enden am ersten Radialträger festgelegt, und mit dem gegenüberliegenden Ende am zweiten Radialträger festgelegt. Die erste Elektrode kann beispielsweise mit einer Klemm- oder Schraubverbindung an jedem der Radialträger befestigt sein.

Der erste und der zweite Radialträger weisen jeweils zumindest zwei Stege auf, die symmetrisch radial um die Längsachse angeordnet sind und an denen die erste Elektrode festgelegt ist. Zwischen den Stegen weisen die Radialträger Durchgangsöffnungen auf, durch die Flüssigkeit strömen kann.

Bevorzugt ist zumindest einer der Radialträger, weiter bevorzugt sind beide Radialträger elektrisch leitend mit der ersten Elektrode verbunden. Zumindest einer der Radialträger, bevorzugt beide Radialträger, weist einen elektrischen Anschluss auf und ist mit einer Spannungsquelle verbindbar. Da entlang der Längsachse der Durchflusszelle der erste und der zweite Radialträger zwischen sich die erste Elektrode einfassen, ist bevorzugt zumindest ein Radialträger, bevorzugter beide Radialträger, elektrisch mit einer Spannungsquelle verbunden, weiter bevorzugt ist jeder der Radialträger mittels einer separaten oder einer gemeinsamen elektrischen Leitung direkt mit der Spannungsquelle verbunden.

Generell bevorzugt sind die erste Elektrode, die zweite Elektrode, der erste und der zweite Radialträger sowie der erste und der zweite Rohrabschnitt rotationssymmetrisch um eine gemeinsame Längsachse ausgebildet.

Die zweite Elektrode ist elektrisch mit einem Anschluss der entgegengesetzten Polarität einer Spannungsquelle verbunden. Dabei kann eine der Elektroden mit dem erdnahen Anschluß einer Spannungsquelle verbunden sein und die andere Elektrode mit dem spannungsführenden Anschluß der Spannungsquelle. Optional ist z.B. die erste Elektrode mit einem erdnahen Anschluß einer Spannungsquelle, z.B. mit dem nullleitenden Anschluß einer Spannungsquelle verbunden und die zweite Elektrode mit dem spannungsführenden Anschluß der Spannungsquelle.

Bevorzugt sind die erste und zweite Elektrode mit Spannung entgegengesetzter Polarität und gleichem Betrag beaufschlagbar, z.B. die eine Elektrode mit +15kV, die andere mit -15kV.

Generell bevorzugt besteht der erste und der zweite Radialträger jeweils einstückig aus Metall, und auch die zweite Elektrode ist bevorzugt einstückig aus Metall. Der erste Rohrabschnitt und zweite Rohrabschnitt bestehen vorzugsweise jeweils einstückig aus einem elektrisch nicht leitenden Material, bzw. bilden einen Isolator zwischen der zweiten Elektrode und den Radialträgern.

Bevorzugt besteht die erste Elektrode einstückig aus Metall.

Die erste Elektrode weist bevorzugt einen zylindrischen Außenumfang auf, wobei weiter bevorzugt die erste Elektrode in dem axialen Bereich, über den sich die zweite Elektrode zumindest anteilig erstreckt, einen größeren Außendurchmesser aufweist als in dem axialen Bereich, in dem sich die erste Elektrode im ersten Rohrabschnitt und/oder im zweiten Rohrabschnitt erstreckt oder im dem sie mit einem der Radialträger verbunden ist. Ein größerer Außendurchmesser der ersten Elektrode in dem Bereich, der von der zweiten Elektrode mit Abstand umfasst ist, führt zu einer Konzentration des elektrischen Felds zwischen der ersten und der zweiten Elektrode in diesem Bereich.

Generell hat die Durchflusszelle den Vorteil, dass die erste Elektrode gegen eine weitere erste Elektrode auf einfache Weise ausgetauscht werden kann. Optional liegt die Durchflusszelle daher in Kombination mit zumindest einer weiteren ersten Elektrode vor. Die zumindest eine weitere erste Elektrode kann z.B. in ihrem axialen Bereich, in dem sie von der zweiten Elektrode umfasst wird, einen unterschiedlichen Außendurchmesser aufweisen. Auf diese Weise kann die elektrische Feldstärke zwischen den Elektroden durch Austausch der ersten Elektrode gegen eine mit einem abweichenden Außendurchmesser in dem Bereich, der von der zweiten Elektrode umfasst wird, eingestellt werden, z.B. bei einem Wechsel der Flüssigkeit, die behandelt wird. Da die Durchflusszelle eine einfache Demontage durch Lösen der Verbindungen der ersten Elektrode mit dem ersten und dem zweiten Radialträger erlaubt, kann die erste Elektrode gegen eine weitere erste Elektrode ausgetauscht werden.

Alternativ kann die Durchflusszelle in Kombination mit einer weiteren zweiten Elektrode vorliegen, die einen unterschiedlichen Innendurchmesser aufweist, beispielsweise einen geringeren Innendurchmesser. Denn die erfindungsgemäße Durchflusszelle erlaubt auf einfache Weise, nämlich durch Lösen zumindest einer Verbindung der ersten Elektrode mit dem ersten und/oder zweiten Radialträger eine einfache Demontage, sodass die zweite Elektrode gegen eine weitere zweite Elektrode ausgetauscht werden kann, die einen abweichenden Innendurchmesser aufweist. Eine solche Kombination kann z.B. das Rohrstück sein, das von dem ersten Rohrabschnitt, dem zweiten Rohrabschnitt und der zwischen diesen angeordneten zweiten Elektrode gebildet wird, mit zumindest zwei zweiten Elektroden, von denen nur eine an den Radialträgern angebracht ist und die zumindest eine andere gegen die an den Radialträgern angebrachte Elektrode austauschbar ist.

Generell bevorzugt weisen die Radialträger, der erste und der zweite Rohrabschnitt und die zwei Elektroden einen kreisförmigen Innenquerschnitt auf, wobei der Innenquerschnitt der Radialträger durch zumindest zwei Stege geteilt ist.

Bevorzugt sind die Innenflächen der Radialträger, die Innenflächen von erstem und zweitem Rohrabschnitt, die Innenfläche der zweiten Elektrode und die Außenfläche der ersten Elektrode zueinander koaxial und rotationssymmetrisch.

Der erste Radialträger und der zweite Radialträger und/oder die zweite Elektrode können jeweils Ausnehmungen aufweisen, z.B. an ihren Stirnflächen, in die der erste bzw. zweite Rohrabschnitt eingreift. Der erste und der zweite Rohrabschnitt können z.B. zylindrisch sein, sodass die dem Rohrabschnitt zugewandten Ausnehmungen der Radialträger und der zweiten Elektrode ringförmig sein können, mit einer Auflagefläche 20, die senkrecht zur Längsachse oder in einem Winkel zur Längsachse, z.B. kegelförmig verläuft.

Bevorzugt ist eine umfänglich geschlossene Dichtung, beispielsweise ein O-Ring, jeweils zwischen dem ersten Rohrabschnitt und dem ersten Radialträger und der gegenüberliegenden zweiten Elektrode angeordnet, sowie zwischen dem zweiten Rohrabschnitt und der zweiten Elektrode und dem dieser gegenüberliegenden zweiten Radialträger.

Die Erfindung wird nun genauer mit Bezug auf die Figuren beschrieben, die eine bevorzugte Ausführungsform der Durchflusszelle in
- Figur 1 im Schnitt parallel zur Längsachse,
- Figur 2 in einer Aufsicht auf die Durchflusszelle in Richtung der Längsachse, wobei Figur 1 den Schnitt A-A von Figur 2 zeigt,
- Figur 3 den Schnitt B-B aus Fig. 1 und
- Figur 4 den Schnitt C-C aus Fig. 1 zeigt.

In den Figuren bezeichnen gleiche Bezugsziffern funktionsgleiche Elemente.

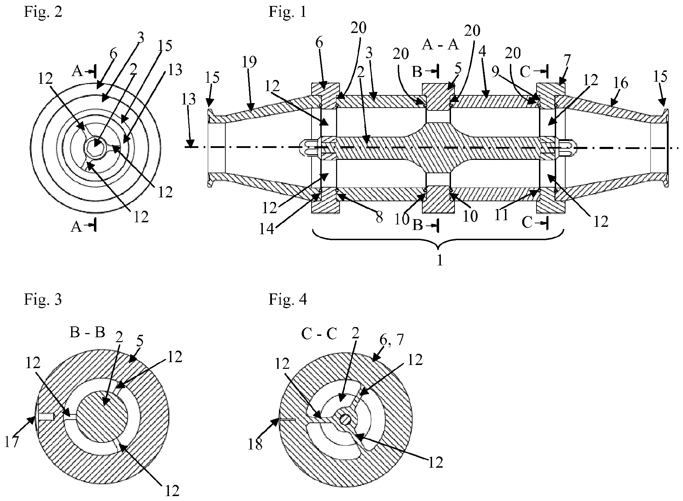

Die Figur 1 zeigt eine Durchflusszelle, deren Rohrstück 1 einen Durchflusszelle mit der darin enthaltenen ersten Elektrode 2 bildet, wobei das Rohrstück 1 von einem ersten Rohrabschnitt 3 und einem zweiten Rohrabschnitt 4 mit einer zwischen diesen angeordneten zweiten Elektrode 5 gebildet wird, die umfänglich geschlossen ist. Der erste Rohrabschnitt 2, der zweite Rohrabschnitt 4 und die zwischen diesen angeordnete zweite Elektrode 5 ist zwischen einem ersten Radialträger 6 und einem zweiten Radialträger 7 angeordnet. Der erste Radialträger 6 und der zweite Radialträger 7 klemmen zwischen sich den ersten Rohrabschnitt 3, den zweiten Rohrabschnitt 4 und die zwischen diesen angeordnete zweite Elektrode 5 ein.

Der erste und zweite Radialträger 6, 7 weisen jeweils zumindest zwei radiale Stege 12 auf, an denen entlang der gemeinsamen Längsachse 13 die erste Elektrode 2 befestigt ist. Die erste Elektrode 2 ist jeweils endständig mit einer Schraubverbindung mit einer zentralen Öffnung der Stege 12 verbunden. Die erste Elektrode 2 belastet die Stege 12, sodass der erste Radialträger gegen den zweiten Radialträger belastet wird und die beiden Radialträger 6, 7 mittels der ersten Elektrode 2 aufeinander zu verspannt sind. Durch dieses Verspannen werden der erste Rohrabschnitt 3, der zweite Rohrabschnitt 4 und die zwischen diesen angeordnete zweite Elektrode 5 zwischen erstem und zweitem Radialträger 6, 7 fixiert.

Der erste Radialträger 1 weist eine dem angrenzenden ersten Rohrabschnitt 3 zugewandte ringförmige Ausnehmung 8 auf, in die ein endständiger Abschnitt des ersten Rohrabschnitts 3 eingreift. Entsprechend weist der zweite Radialträger 7 eine ringförmige Ausnehmung 9 auf, in die ein endständiger Abschnitt des zweiten Rohrabschnitts 4 eingreift. Die zweite Elektrode 5 weist an gegenüberliegenden Seiten, die bevorzugt ihre Stirnseiten sind, ringförmige Ausnehmungen 10 auf, in die jeweils endständige Abschnitte des ersten Rohrabschnitts 3 bzw. des zweiten Rohrabschnitts 4 eingreifen.

Zwischen den Rohrabschnitten 3, 4 und dem jeweils gegenüberliegend angeordneten ersten Radialträger 6, zweiten Elektrode 5 und dem zweiten Radialträger 7 sind jeweils Dichtungen 11 angeordnet, beispielsweise O-Ringe.

An dem ersten Radialträger 6 ist gegenüber dem ersten Rohrabschnitt 3 ein erstes Anschlussstück 19 angeschlossen, beispielsweise mittels eines Gewindes mit der Ausnehmung 14 des ersten Radialträgers 6 gegenüber seiner ringförmigen Ausnehmung 8 verschraubt. Das erste Anschlussstück 19 weist an seinem Ende einen Stutzen 15 auf. Am gegenüberliegenden Ende weist die Durchflusszelle ein zweites Anschlussstück 16 auf, das in einer Ausnehmung 14, die am zweiten Radialträger 7 gegenüber dessen ringförmiger Ausnehmung 9 bzw. gegenüber dem zweiten Rohrabschnitt 4 angeordnet ist. Das zweite Anschlussstück 16 weist z.B. eine Auslassöffnung auf.

Die Figur 2 zeigt, dass bevorzugt die erste Elektrode 2 mit zumindest drei gleichmäßig radial angeordneten Stegen 12 des ersten Radialträgers 6 und des zweiten Radialträgers 7 verbunden sein kann.

Die Figur 3 zeigt, dass die erste Elektrode 2 in dem axialen Bereich, in dem sie von der zweiten Elektrode 5 umfänglich umfasst ist, einen größeren Außendurchmesser aufweist, als in einem axialen Abschnitt, in dem die erste Elektrode 2 von dem ersten oder zweiten Rohrabschnitt 3, 4 umfasst ist, oder in dem sie am zweiten Radialträger 7 bzw. am ersten Radialträger 6 befestigt ist.

Weiter zeigt Fig. 3, dass die zweite Elektrode 5 als elektrischen Anschluss 17 z.B. eine Anschlussfläche mit einem in die zweite Elektrode 5 geschnittenen Gewinde aufweisen kann.

Die Figuren zeigen, dass die erste Elektrode 2 entsprechend der bevorzugten Ausführungsform einstückig ausgebildet ist und dass die zweite Elektrode 5 einstückig ausgebildet ist.

Weiter zeigt die Figur 4, dass zumindest einer der Radialträger 6, 7 einen weiteren elektrischen Anschluss 18 aufweist, z.B. eine Anschlussfläche mit einem in den Radialträger 6, 7 eingeschnittenen Gewinde.

### Bezugszeichen:

1 Rohrstück
2 erste Elektrode
3 erster Rohrabschnitt
4 zweiter Rohrabschnitt
5 zweite Elektrode
6 erster Radialträger
7 zweiter Radialträger
8 ringförmige Ausnehmung
9 ringförmige Ausnehmung
10 ringförmige Ausnehmung
11 Dichtung
12 Steg
13 Längsachse
14 Ausnehmung
15 Stutzen
16 zweites Anschlussstück
17 elektrischer Anschluss
18 elektrischer Anschluss
19 erstes Anschlussstück
20 Auflagefläche

## Patentansprüche

1. Durchflusszelle mit einem Rohrstück (1), das sich entlang einer Längsachse (13) erstreckt und an dessen Enden eine Einlassöffnung und eine gegenüberliegende Auslassöffnung angeordnet sind, mit einer zumindest abschnittsweise in dem Rohrstück (1) koaxial angeordneten ersten Elektrode (2), die koaxial von einer beabstandeten zweiten Elektrode (5) umfasst wird, wobei das Rohrstück (1) von einem ersten Rohrabschnitt (3) und einem zweiten Rohrabschnitt (4) und einer zwischen dem ersten und zweiten Rohrabschnitt (3, 4) angeordneten umfänglich geschlossenen zweiten Elektrode (5) gebildet wird,
wobei angrenzend an die der zweiten Elektrode (5) gegenüberliegenden Enden des ersten Rohrabschnitts (3) und des zweiten Rohrabschnitts (4) ein erster und ein zweiter Radialträger (6, 7) angeordnet sind und
die erste Elektrode (2) an dem ersten und zweiten Radialträger (6, 7) festgelegt ist, von denen zumindest einer elektrisch leitend mit der ersten Elektrode (2) verbunden ist, und
der erste und zweite Radialträger (6, 7) mittels der ersten Elektrode (2) aufeinander zu verspannt sind.

2. Durchflusszelle nach Anspruch 1, **dadurch gekennzeichnet, dass** die erste Elektrode (2) linear entlang einer gemeinsamen Längsachse (13) zwischen dem ersten und dem zweiten Radialträger (6, 7) erstreckt und in dem axialen Bereich, in dem sie von der zweiten Elektrode (5) mit Abstand umfasst ist, einen größeren Außendurchmesser aufweist als in den axialen Bereichen, die von dem ersten und zweiten Rohrabschnitt (3, 4) umfasst sind.

3. Durchflusszelle nach einem der voranstehenden Ansprüche, **dadurch gekennzeichnet, dass** der erste Rohrabschnitt (3) und der zweite Rohrabschnitt (4) nur dadurch gegen die zweite Elektrode (5) und zwischen dem ersten Radialträger (6) und dem zweiten Radialträger (7) geklemmt sind, dass die erste Elektrode (2) den ersten Radialträger (6) auf den zweiten Radialträger (7) zu verspannt.

4. Durchflusszelle nach einem der voranstehenden Ansprüche, **dadurch gekennzeichnet, dass** der erste Radialträger (6) und der zweite Radialträger (7) jeweils zumindest zwei Stege (12) aufweisen, die radial symmetrisch angeordnet sind und an denen die erste Elektrode (2) festgelegt ist.

5. Durchflusszelle nach einem der voranstehenden Ansprüche, **dadurch gekennzeichnet, dass** der erste Rohrabschnitt (3), der zweite Rohrabschnitt (4), die zweite Elektrode (5) und der erste und der zweite Radialträger (6, 7) jeweils kreisförmige Innenquerschnitte aufweisen.

6. Durchflusszelle nach einem der voranstehenden Ansprüche, **dadurch gekennzeichnet, dass** der erste Rohrabschnitt (3) und der zweite Rohrabschnitt (4), die zwischen diesen angeordnete zweite Elektrode (5) und die den ersten und zweiten Rohrabschnitt (3, 4) entlang der Längsachse (13) zwischen sich umfassenden ersten und zweiten Radialträger (6, 7) denselben Innendurchmesser aufweisen.

7. Durchflusszelle nach einem der voranstehenden Ansprüche, **dadurch gekennzeichnet, dass** an dem ersten Radialträger (6) ein erstes Anschlussstück (19) aus Isolator angeschlossen ist und gegenüberliegend an dem zweiten Radialträger (7) ein zweites Anschlussstück (16) aus Isolator angeschlossen ist.

8. Durchflusszelle nach einem der voranstehenden Ansprüche, **dadurch gekennzeichnet, dass** die zweite Elektrode (5) und der erste und der zweite Radialträger (6, 7) aus Metall bestehen und der erste und der zweite Rohrabschnitt (3, 4) aus Isolator bestehen.

9. Durchflusszelle nach einem der voranstehenden Ansprüche, **dadurch gekennzeichnet, dass**, optional jeweils mit einer zwischenliegenden Dichtung (11), der erste Rohrabschnitt (3) jeweils in einer ebenen, gewölbten oder kegelförmigen Auflagefläche (20), die ringförmig ist, gegen den ersten Radialträger (6) und die zweite Elektrode (5) anliegt und der zweite Rohrabschnitt (4) jeweils in einer ebenen, gewölbten oder kegelförmigen Auflagefläche (20), die ringförmig ist, gegen den zweiten Radialträger (7) und die zweite Elektrode (5) anliegt.

10. Durchflusszelle nach einem der voranstehenden Ansprüche, **dadurch gekennzeichnet, dass** der erste Rohrabschnitt (3) nur dadurch flüssigkeitsdicht gegen den ersten Radialträger (6) und die zweite Elektrode (5) anliegt und der zweite Rohrabschnitt (4) nur dadurch flüssigkeitsdicht gegen den zweiten Radialträger (7) und die zweite Elektrode (5) anliegt, dass der erste Radialträger (6) und der zweite Radialträger (7) mittels der ersten Elektrode (2) aufeinander zu gespannt sind.

11. Durchflusszelle nach einem der voranstehenden Ansprüche, **dadurch gekennzeichnet, dass** die zweite Elektrode (5) mit einer Spannungsquelle verbunden ist und zumindest einer von erstem und zweiten Radialträger (6, 7) elektrisch leitend mit der ersten Elektrode (2) und einer Spannungsquelle verbunden ist, wobei die Spannungsquellen eingerichtet sind, die Elektroden (5, 2) mit Spannung von gleichem Betrag und entgegengesetzter Polarität zu beaufschlagen.

12. Durchflusszelle nach einem der voranstehenden Ansprüche, **dadurch gekennzeichnet, dass** sie in Kombination mit einer weiteren erste Elektrode (2) vorliegt, die einen anderen Außendurchmesser in dem axialen Bereich aufweist, in dem sie von der zweiten Elektrode (5) umfasst wird, und/oder in Kombination mit einer weiteren zweiten Elektrode (5) vorliegt, die in dem axialen Bereich, in dem sie die erste Elektrode (2) umfasst, einen anderen Innendurchmesser aufweist.

13. Durchflusszelle nach einem der voranstehenden Ansprüche, **dadurch gekennzeichnet, dass** der erste Radialträger (6) und zweite Radialträger (7) jeweils einen Abschnitt der Durchflusszelle bilden.

14. Verfahren zur Behandlung einer Flüssigkeit mit elektrischen Feldern, **dadurch gekennzeichnet, dass** eine Durchflusszelle nach einem der voranstehenden Ansprüche bereitgestellt wird und die Flüssigkeit durch die Durchflusszelle bewegt wird und zwischen der ersten Elektrode (2) und der zweiten Elektrode (5) Spannungen entgegengesetzter Polarität angelegt werden.

15. Verfahren nach Anspruch 14, **dadurch gekennzeichnet, dass** bei einem Wechsel der Flüssigkeit gegen eine andere die erste Elektrode (2) gegen eine weitere erste Elektrode (2) ausgetauscht wird, die einen anderen Außendurchmesser in dem axialen Bereich aufweist, in dem sie von der zweiten Elektrode (5) umfasst wird, und/oder die zweite Elektrode (5) gegen eine weitere zweite Elektrode (5) ausgetauscht wird, die in dem axialen Bereich, in dem sie die erste Elektrode (2) umfasst, einen anderen Innendurchmesser aufweist.

## Claims

1. Flow cell having a pipe section (1) which extends along a longitudinal axis (13) and at the ends of which an inlet opening and an opposite outlet opening are arranged, having a first electrode (2) which is arranged coaxially at least in sections in the pipe section (1) which first electrode (2) is coaxially surrounded by a spaced-apart second electrode (5), wherein the pipe section (1) is formed by a first pipe section (3) and a second pipe section (4) and a circumferentially closed second electrode (5) arranged between the first and second pipe sections (3, 4),
wherein a first and a second radial carrier (6, 7) are arranged adjacent to the ends of the first tube section (3) and the second tube section (4) opposite the second electrode (5), and
the first electrode (2) is fixed to the first and second radial carriers (6, 7), at least one of which is electrically conductively connected to the first electrode (2), and
the first and second radial carriers (6, 7) are braced towards each other by means of the first electrode (2).

2. Flow cell according to claim 1, **characterized in that** the first electrode (2) extends linearly along a common longitudinal axis (13) between the first and second radial carriers (6, 7) and has a larger external diameter in the axial region in which it is surrounded with a spacing by the second electrode (5) than in the axial regions which are surrounded by the first and second tube sections (3, 4).

3. Flow cell according to one of the preceding claims, **characterized in that** the first pipe section (3) and the second pipe section (4) are only clamped against the second electrode (5) and between the first radial carrier (6) and the second radial carrier (7) **in that** the first electrode (2) braces the first radial carrier (6) towards the second radial carrier (7).

4. Flow cell according to one of the preceding claims, **characterized in that** the first radial carrier (6) and the second radial carrier (7) each have at least two webs (12) which are arranged radially symmetrically and on which the first electrode (2) is fixed.

5. Flow cell according to one of the preceding claims, **characterized in that** the first pipe section (3), the second pipe section (4), the second electrode (5) and the first and second radial carriers (6, 7) each have circular internal cross-sections.

6. Flow cell according to one of the preceding claims, **characterized in that** the first pipe section (3) and the second pipe section (4), the second electrode (5) arranged between them and the first and second radial carriers (6, 7) which enclose the first and second pipe sections (3, 4) between them along the longitudinal axis (13) have the same internal diameter.

7. Flow cell according to one of the preceding claims, **characterized in that** a first connecting piece (19) made of insulator is connected to the first radial carrier (6) and a second connecting piece (16) made of insulator is connected opposite to the second radial carrier (7).

8. Flow cell according to one of the preceding claims, **characterized in that** the second electrode (5) and the first and second radial carriers (6, 7) consist of metal and the first and second tube sections (3, 4) consist of insulator.

9. Flow cell according to one of the preceding claims, **characterized in that**, optionally in each case with an interposed seal (11), the first tube section (3) in each case rests in a flat, curved or conical bearing surface (20), which is annular, against the first radial carrier (6) and the second electrode (5) and the second tube section (4) rests against the second radial carrier (7) and the second electrode (5) in a flat, curved or conical contact surface (20), which is annular.

10. Flow cell according to one of the preceding claims, **characterized in that** the first pipe section (3) lies against the first radial carrier (6) and the second electrode (5) in a liquid-tight manner only **in that** the first radial carrier (6) and the second radial carrier (7) are braced towards each other by means of the first electrode (2).

11. Flow cell according to one of the preceding claims, **characterized in that** the second electrode (5) is connected to a voltage source and at least one of the first and second radial carriers (6, 7) is electrically conductively connected to the first electrode (2) and a voltage source, the voltage sources being arranged to apply a voltage of equal magnitude and opposite polarity to the electrodes (5, 2).

12. Flow cell according to one of the preceding claims, **characterized in that** it is present in combination with a further first electrode (2), which has a different outer diameter in the axial region in which it is surrounded by the second electrode (5), and/or is present in combination with a further second electrode (5), which has a different inner diameter in the axial region in which it surrounds the first electrode (2).

13. Flow cell according to one of the preceding claims, **characterized in that** the first radial carrier (6) and second radial carrier (7) each form a section of the flow cell.

14. Process for treating a liquid with electric fields, **characterized in that** a flow cell according to one of the preceding claims is provided and the liquid is moved through the flow cell and voltages of opposite polarity are applied between the first electrode (2) and the second electrode (5).

15. Process according to claim 14, **characterized in that** when the liquid is changed for another, the first electrode (2) is exchanged for a further first electrode (2) which has a different external diameter in the axial region in which it is surrounded by the second electrode (5), and/or the second electrode (5) is exchanged for a further second electrode (5) which has a different internal diameter in the axial region in which it surrounds the first electrode (2).

## Revendications

1. Cellule à circulation continue comprenant une pièce tubulaire (1) qui s'étend le long d'un axe longitudinal (13) et aux extrémités de laquelle sont disposées une ouverture d'entrée et une ouverture de sortie opposée, avec une première électrode (2) disposée coaxialement au moins par tronçons dans la pièce tubulaire (1), qui est entourée coaxialement par une deuxième électrode (5) espacée, la pièce tubulaire (1) étant formée par un premier tronçon de tube (3) et un deuxième tronçon de tube (4) et par une deuxième électrode (5) fermée sur sa circonférence et disposée entre le premier et le deuxième tronçon de tube (3, 4),
un premier et un deuxième supports radiaux (6, 7) étant disposés de manière adjacente aux extrémités de la première section de tube (3) et de la deuxième section de tube (4) opposées à la deuxième électrode (5), et
la première électrode (2) est fixée sur les premier et deuxième supports radiaux (6, 7), dont au moins un est relié de manière électriquement conductrice à la première électrode (2), et
les premier et deuxième supports radiaux (6, 7) sont serrés l'un vers l'autre au moyen de la première électrode (2).

2. Cellule à circulation selon la revendication 1, **caractérisée en ce que** la première électrode (2) s'étend linéairement le long d'un axe longitudinal commun (13) entre les premier et deuxième supports radiaux (6, 7) et présente un diamètre extérieur plus grand dans la zone axiale dans laquelle elle est entourée à distance par la deuxième électrode (5) que dans les zones axiales entourées par les première et deuxième sections de tube (3, 4).

3. Cellule à circulation selon l'une des revendications précédentes, **caractérisée en ce que** le premier tronçon de tube (3) et le deuxième tronçon de tube (4) ne sont serrés contre la deuxième électrode (5) et entre le premier support radial (6) et le deuxième support radial (7) que par le fait que la première électrode (2) serre le premier support radial (6) sur le deuxième support radial (7).

4. Cellule à circulation selon l'une des revendications précédentes, **caractérisée en ce que** le premier support radial (6) et le deuxième support radial (7) présentent chacun au moins deux entretoises (12) qui sont disposées de manière radialement symétrique et sur lesquelles la première électrode (2) est fixée.

5. Cellule à circulation selon l'une des revendications précédentes, **caractérisée en ce que** la première section de tube (3), la deuxième section de tube (4), la deuxième électrode (5) et les premier et deuxième supports radiaux (6, 7) présentent respectivement des sections transversales intérieures circulaires.

6. Cellule à circulation continue selon l'une des revendications précédentes, **caractérisée en ce que** le premier tronçon de tube (3) et le deuxième tronçon de tube (4), la deuxième électrode (5) disposée entre ceux-ci et les premier et deuxième supports radiaux (6, 7) entourant entre eux les premier et deuxième tronçons de tube (3, 4) le long de l'axe longitudinal (13) présentent le même diamètre intérieur.

7. Cellule à circulation selon l'une des revendications précédentes, **caractérisée en ce qu'**une première pièce de raccordement (19) en isolant est raccordée au premier support radial (6) et **en ce qu'**une deuxième pièce de raccordement (16) en isolant est raccordée en face au deuxième support radial (7).

8. Cellule à circulation selon l'une des revendications précédentes, **caractérisée en ce que** la deuxième électrode (5) et les premier et deuxième supports radiaux (6, 7) sont en métal et les première et deuxième sections de tube (3, 4) sont en isolant.

9. Cellule à circulation selon l'une des revendications précédentes, **caractérisée en ce que**, en option avec un joint d'étanchéité (11) intercalé, le premier tronçon de tube (3) s'appuie respectivement dans une surface d'appui (20) plane, bombée ou conique, qui est de forme annulaire, contre le premier support radial (6) et la deuxième électrode (5) et le deuxième tronçon de tube (4) s'appuie respectivement dans une surface d'appui (20) plane, bombée ou conique, qui est annulaire, contre le deuxième support radial (7) et la deuxième électrode (5).

10. Cellule à circulation selon l'une des revendications précédentes, **caractérisée en ce que** le premier tronçon de tube (3) n'est appliqué de manière étanche aux liquides contre le premier support radial (6) et la deuxième électrode (5) et le deuxième tronçon de tube (4) n'est appliqué de manière étanche aux liquides contre le deuxième support radial (7) et la deuxième électrode (5) que par le fait que le premier support radial (6) et le deuxième support radial (7) sont serrés l'un vers l'autre au moyen de la première électrode (2).

11. Cellule à circulation selon l'une des revendications précédentes, **caractérisée en ce que** la deuxième électrode (5) est reliée à une source de tension et au moins l'un des premier et deuxième supports radiaux (6, 7) est relié de manière électriquement conductrice à la première électrode (2) et à une source de tension, les sources de tension étant agencées pour alimenter les électrodes (5, 2) avec une tension de même valeur et de polarité opposée.

12. Cellule à circulation selon l'une des revendications précédentes, **caractérisée en ce qu'**elle est présente en combinaison avec une autre première électrode (2) qui présente un diamètre extérieur différent dans la zone axiale dans laquelle elle est entourée par la deuxième électrode (5), et/ou en combinaison avec une autre deuxième électrode (5) qui présente un diamètre intérieur différent dans la zone axiale dans laquelle elle entoure la première électrode (2).

13. Cellule selon l'une des revendications précédentes, **caractérisée en ce que** le premier support radial (6) et le deuxième support radial (7) forment chacun une section de la cellule à circulation.

14. Procédé de traitement d'un liquide avec des champs électriques, **caractérisé en ce qu'**une cellule à circulation selon l'une des revendications précédentes est fournie et le liquide est déplacé à travers la cellule à circulation et des tensions de polarité opposée sont appliquées entre la première électrode (2) et la seconde électrode (5).

15. Procédé selon la revendication 14, **caractérisé en ce que**, lors du remplacement du liquide par un autre, la première électrode (2) est remplacée par une autre première électrode (2) qui présente un autre diamètre extérieur dans la zone axiale dans laquelle elle est entourée par la deuxième électrode (5), et/ou la deuxième électrode (5) est remplacée par une autre deuxième électrode (5) qui présente un autre diamètre intérieur dans la zone axiale dans laquelle elle entoure la première électrode (2).
